# EUROPÄISCHE PATENTSCHRIFT

(11) **EP 3 500 476 B1**
(45) Veröffentlichungstag und Bekanntmachung des Hinweises auf die Patenterteilung: **24.02.2021**
(21) Anmeldenummer: 17758103.0
(22) Anmeldetag: 16.08.2017
(51) Int. Cl.: B62D 1/04, B62D 1/12, B62D 1/183

(54) **STEUERHORN FÜR DIE LENKUNG EINES KAFTFAHRZEUGS**
CONTROL YOKE FOR STEERING A MOTOR VEHICLE
MANCHE PERMETTANT DE DIRIGER UN VÉHICULE AUTOMOBILE

(30) Priorität: 19.08.2016 DE 102016115466
(43) Veröffentlichungstag der Anmeldung: 26.06.2019
(73) Patentinhaber: thyssenkrupp Presta AG, 9492 Eschen (LI); thyssenkrupp AG, 45143 Essen (DE)
(72) Erfinder: KREUTZ, Daniel, 6800 Feldkirch (AT)
(74) Vertreter: thyssenkrupp Intellectual Property GmbH
(86) Internationale Anmeldenummer: PCT/EP2017/070757
(87) Internationale Veröffentlichungsnummer: WO 2018/033569

(56) Entgegenhaltungen:
- EP-A2- 2 033 874
- DE-A1- 10 248 487
- ES-A1- 2 351 636
- FR-A1- 2 861 657

## Beschreibung

Die Erfindung betrifft ein Steuerhorn für die Lenkung eines Kraftfahrzeugs, mit einer auf einer Lenkwelle befestigten Nabe, die mit zwei seitlich in entgegengesetzte Richtungen abstehenden Lenkgriffen verbunden ist und eine motorisch angetriebene Verstellvorrichtung aufweist, mittels derer die Lenkergriffe aus einer Gebrauchsstellung mit größerem Abstand zur Nabe in eine Bereitschaftsstellung mit kleinerem Abstand zur Nabe verschiebbar sind und umgekehrt.

Bei Kraftfahrzeugen, in welchen ein automatisierter Fahrbetrieb möglich ist, ohne dass der Fahrer eine Lenkeingabe über ein Lenkeingabemittel einleiten muss, besteht die Gefahr, dass der Fahrer ungewollt das Lenkrad berührt und damit eine ungewollte Fahrbewegung ausführt. Zudem nimmt ein Lenkrad unnötig Platz weg. Gebräuchliche Lenkräder bestehen aus einem runden, geschlossenen Lenkradkranz, welcher über feststehende Stege mit der Lenkradnabe verbunden ist. Der Unterbereich des Lenkradkranzes kann zum Beispiel für sportliche Fahrzeuge mit einer Flachstelle ausgeführt sein, um dem Fahrer mehr Beinfreiheit zu geben. Insgesamt sind die gebräuchlichen Lenkräder aber in ihrer Form starr und nicht veränderbar. Einstellbar ist in der Regel lediglich ihre Position, die längs-und höhenverstellbar sind. Außerdem gibt es Lenkräder, die sich nach oben kippen lassen, um dem Fahrer das Einsteigen zu erleichtern.

In zukünftigen Fahrzeugen wird der Automatisierungsgrad stark ansteigen, ohne dass der Fahrer im Fahrzeugregelkreis eingebunden ist. In diesem Zusammenhang sei der SAE4 Level Automatisierungsgrad gemäß VDA genannt. In solchen Fahrzeugen wird im automatisierten Fahrmodus das Lenkrad als störend empfunden, da der Fahrer den Platz vor sich nicht oder nur eingeschränkt nutzen kann. Da übliche Lenkräder einen großen Durchmesser aufweisen, können sie nicht ohne weiteres aus der unmittelbaren Nähe des Fahrers entfernt werden.

Die FR 2 861 657 A1 offenbart eine Art größenverstellbares Steuerhorn, bei dem seitliche Griffe mittels einer Ritzel-Zahnstangenverbindung und eines Motors in eine ausgefahrene oder eingefahrene Position gebracht werden können. Im völlig eingefahrenen Zustand kann das Lenkrad nicht mehr betätigt werden. Dies hat den Nachteil, dass der Fahrer im Notfall nicht korrigierend eingreifen kann.

Aus der EP 2 033 874 A2 ist ein Steuerhorn der eingangs genannten Art bekannt, bei der die Lenkergriffe zwischen einer Bereitschaftsstellung und einer Gebrauchsstellung drehbar sind. Nachteilig ist der komplizierte und räumlich aufwendige Aufbau der Verstellvorrichtung.

Aufgabe der Erfindung ist es, ein Steuerhorn für die Lenkung eines Kraftfahrzeugs der eingangs genannten Art anzugeben, welches einfach und raumsparend aufgebaut ist und im Notfall manuell betätigt werden kann.

Die Erfindung löst diese Aufgabe dadurch, dass die Lenkgriffe mittels der Verstellvorrichtung um die die beiden Lenkgriffe verbindende, quer zu einer Drehachse der Lenkwelle angeordnete Querachse in der Gebrauchsstellung zum Fahrer hin und in der Bereitschaftsstellung vom Fahrer weg und umgekehrt drehbar sind, wobei die Lenkgriffe mittels der Verstellvorrichtung entlang der Querachse verschiebbar sind.

Durch die zusätzliche Drehbewegung vom Fahrer weg können die Lenkgriffe aus dem Bereich des Fahrers entfernt und gleichzeitig um einen definierten Abstand eingefahren werden. Die Verstellvorrichtung ermöglicht Verstellwege von der Gebrauchsstellung in die Bereitschaftsstellung entlang der Querachse zwischen 30 bis 40 mm. Durch die Rotationsbewegung entlang der Drehachse ist das Steuerhorn im zusammengefahrenen Zustand nicht nur kompakter, sondern gibt dem Fahrer zusätzlichen Raum und gleichzeitig bleibt es aber in einer Bereitschaftsstellung, die ein Eingreifen des Fahrers jederzeit zulässt. Der Fahrer kann die Lenkgriffe weiterhin betätigen, auch wenn sie dicht an der Nabe angeordnet und in Richtung der Fahrzeugfront von ihm weggekippt sind. Die translatorische Bewegung von der Gebrauchsstellung in die Bereitschaftsstellung und umgekehrt kann vor der rotatorischen Bewegung durchgeführt werden oder andersrum. Weiterhin ist es bevorzugt eine gekoppelte Bewegung aus Translation und Rotation der Lenkgriffe durchzuführen.

Die Nabe umfasst eine Befestigungsöffnung. Die Nabe kann in einem Nabenteil aufgenommen sein. In dem Nabenteil kann ein Airbag integriert sein. An dem Nabenteil können weitere Bedien- und/oder Komfortelemente, wie beispielsweise eine Fahrzeughupe, eine Blinkvorrichtung oder eine Betätigungsvorrichtung für die Fahrzeugbeleuchtung vorgesehen sein. In Ausgestaltung der Erfindung ist vorgesehen, dass die Lenkgriffe jeweils einen in Richtung der genannten Querachse verlaufenden mit dem Nabenteil verbundenen Verbindungsabschnitt aufweisen, der mit einem radial außen angeordneten Griffteil verbunden ist, welches sich in Gebrauchsstellung des Steuerhorns innerhalb einer zur Drehachse der Lenkwelle orthogonalen Ebene nach oben erstreckt und welches sich in Bereitschaftsstellung des Steuerhorns zur Fahrzeugfront hin erstreckt. Das Griffteil ist daher in Gebrauchsstellung des Steuerhorns vom Fahrer sehr bequem zu greifen, kann aber in Bereitschaftsstellung des Steuerhorns im Notfall auch noch gegriffen und betätigt werden, sodass Gefahrensituationen besser umgangen werden können. Die jeweiligen Verbindungsabschnitte verbinden die Griffteile mit der Verstellvorrichtung, welche auf die Verbindungsabschnitte einwirkt.

In einer bevorzugten Ausführungsform können die Lenkgriffe mittels der Verstellvorrichtung zwischen der Gebrauchsstellung und der Bereitschaftsstellung um einen Verdrehwinkel bezogen auf die Drehachse der Lenkwelle zwischen 45° und90° verdrehbar sein. Es ist auch denkbar und möglich, einen Verdrehwinkel der Lenkgriffe einzustellen, welcher kleiner als 45° ist, bezogen auf die Drehachse der Lenkwelle. Weiterhin kann der Verdrehwinkel grösser als 90° sein. Die rotatorische Bewegung des Steuerhorns ermöglicht dem Fahrer die Lenkgriffe in eine für ihn optimale Gebrauchsstellung zu drehen. In Gebrauchsstellung weisen die Lenkgriffe daher schräg nach oben vom Fahrer weg in eine Richtung, die der Fahrer auch von gewöhnlichen Lenkrädern gewöhnt ist und die einen bequemen Griff zulassen. Oder in anderen Worten wird der Verdrehwinkel bezogen auf die Drehachse der Lenkwelle kleiner und geht gegen 0°. In der Bereitschaftsstellung weisen die Lenkgriffe schräg nach vorn, in etwa parallel zur Drehachse der Lenkwelle und in Richtung des Fahrers, d.h. der Verdrehwinkel bezogen auf die Drehachse der Lenkwelle wird grösser und kann einen Verdrehwinkel zwischen 25° und 80° betragen. Die Winkeleinstellung bezogen auf die Gebrauchsstellung und Bereitschaftstellung können auch umgekehrt auf die jeweils andere Stellung übertragen und eingestellt werden. Im Notfall greift der Fahrer die Lenkgriffe und kann die Lenkung sicher betätigen.

Die Position der Verstellvorrichtung wird über einen Sensor, wie beispielsweise einem Hallsensor oder einem magnetoresistiven Sensor, ermittelt.

Eine bevorzugte Ausführungsform der Erfindung sieht vor, dass die Verstellvorrichtung ein mit der Lenkwelle drehfest verbundenes Führungsrohr aufweist, das längs der genannten Querachse ausgerichtet ist. Auf das Führungsrohr kann der Verbindungsabschnitt der Lenkgriffe befestigt werden, sodass die Lenkgriffe entlang der Querachse von der Betriebsstellung in die Gebrauchsstellung gebracht werden können und umgekehrt. Dadurch kann die translatorische Bewegung mit wenigen Bauteilen bereitgestellt werden.

Bevorzugt weist jeder Verbindungsabschnitt der Lenkgriffe ein Verbindungsrohr auf, das gegenüber dem Führungsrohr verschiebbar geführt ist. Eine solche Rohr-in-Rohr-Verbindung ist besonders einfach und stabil. Eine besonders bevorzugte Ausgestaltung der Erfindung sieht vor, dass die jeweiligen Verbindungsrohre und die Verbindungsabschnitte einstückig ausgebildet sind. Hier dient also das jeweilige Verbindungsrohr als Verbindungsabschnitt zum Griffteil des jeweiligen Lenkgriffs.

Gemäß einer weiteren vorteilhaften Ausgestaltung ist das jeweilige Verbindungsrohr durch einen von einem Elektromotor angetriebenen Spindeltrieb gegenüber dem Führungsrohr verschiebbar. Der Elektromotor kann am Spindelende angeordnet sein oder parallel zu der Spindel über einen Spindeltrieb mit der Spindel verbunden werden. Spindeltriebe sind einfach aufgebaut, können größere Verschiebekräfte erzeugen und sind bei abgestelltem Motor durch Selbsthemmung automatisch blockiert. Es ist denkbar und möglich, eine Spindel mit je einer Mutter am Spindelende anzuordnen und die Spindel an einem Spindelende mit einem Linksgewinde und an dem anderen Spindelende mit einem Rechtsgewinde zu versehen.

Vorzugsweise ist in dem Nabenteil eine Rohrführung für das Führungsrohr vorgesehen. In der Rohrführung kann ein Bewegungsbegrenzungselement oder ein Anschlagelement vorgesehen sein, sodass die Verstellvorrichtung nur innerhalb eines definierten Weges in die eingefahrene oder ausgefahrene Position bewegt werden kann.

In einer weiteren vorteilhaften Ausführungsform der Erfindung kann ein einziger Elektromotor mit zwei Spindeltrieben für die Verschiebung der beiden Verbindungsrohre vorgesehen sein. Durch diese Maßnahme kann ein Elektromotor eingespart werden. In weiterer Ausgestaltung ist vorgesehen, dass der Elektromotor im Führungsrohr angeordnet ist, dass auf beiden Axialseiten der Motorwelle jeweils eine Spindel angeordnet ist, die in Richtung des zugehörigen Verbindungsrohrs ausgerichtet ist, dass auf den Spindeln sitzende Muttern jeweils mit dem zugehörigen Verbindungsrohr direkt oder indirekt über weitere Elemente verbunden sind, wobei eine erste Spindel und ihre zugehörige erste Mutter ein Rechtsgewinde und eine zweite Spindel und ihre zugehörige zweite Mutter ein Linksgewinde aufweisen. Durch diese Maßnahme fahren beide Muttern auf den jeweiligen Spindeln gleichzeitig radial nach innen oder radial nach außen, je nach Drehrichtung des Elektromotors.

Bevorzugt sind zwei Elektromotoren mit zwei Spindeltrieben für die Verschiebung des jeweiligen Verbindungsrohrs vorgesehen. Hierfür können Standardbauteile mit relativ kleinen Abmessungen verwendet werden.

In weiterer Ausgestaltung sind die zwei Elektromotoren der Spindeltriebe im Führungsrohr angeordnet, wobei auf den Motorwellen angeordnete Spindeln jeweils in Richtung des zugehörigen Verbindungsrohrs ausgerichtet sind und die auf den Spindeln sitzende Muttern jeweils mit dem zugehörigen Verbindungsrohr direkt oder indirekt über weitere Elemente verbunden sind. Bei Betätigung der Elektromotoren fährt die jeweilige Mutter auf der sich drehenden Spindel radial nach innen auf das Nabenteil zu oder radial nach außen vom Nabenteil weg und nimmt dabei das jeweilige Verbindungsrohr und damit den jeweiligen Lenkgriff in dieselbe Richtung mit.

Vorzugsweise können auch die zwei Elektromotoren der Spindeltriebe jeweils in den Verbindungsrohren angeordnet sein, wobei die auf den Motorwellen angeordneten Spindeln jeweils in Richtung des Führungsrohrs ausgerichtet sind und die auf den Spindeln sitzenden Muttern mit dem Führungsrohr verbunden sind. Die Betätigung der Elektromotoren hat bei dieser Ausführungsform den Effekt, dass sich die drehenden Spindeln in die fixierten Muttern des Führungsrohrs hineinschrauben und dabei den jeweiligen Elektromotor und den mit dem Elektromotor verbundenen Lenkgriff auf das Nabenteil zu bewegen oder bei umgekehrter Drehrichtung des Elektromotors vom Nabenteil weg bewegen.

Um die Verdrehbarkeit der Lenkgriffe sicherzustellen, sind die Verbindungsrohre jeweils durch ein Lager um die genannte Querachse drehbar gelagert. Vorzugsweise kommt als Lager ein Gleitlager zum Einsatz, welches zwischen dem Verbindungsabschnitt und dem Verbindungsrohr angeordnet ist.. Diese Bauart ist besonders kompakt und einfach herstellbar.

Um die Verdrehfunktion der Verbindungsrohre und/oder der Verbindungsabschnitte der Lenkgriffe mit möglichst geringem Aufwand darzustellen, sieht eine Weiterbildung der Erfindung vor, dass die Verbindungsrohre und/oder das Führungsrohr und/oder der Lenkgriff jeweils eine zumindest in einem Abschnitt vorgesehene Ausnehmung aufweisen, in die jeweils ein am Führungsrohr oder in einem Gehäuseelement befestigt oder sitzt auf einem Gehäusevorsprung des zugehörigen Elektromotors, welches die Motorwelle und die Gewindespindel über Kugellager miteinander verbindet, befestigter, radial nach außen ragender Bolzen eingreift. Die Ausnehmung kann als Kurvenbahn ausgebildet sein. Die genannte Ausnehmung stellt eine Kulissenführung dar, welche bewirkt, dass ein mittels des Spindeltriebs in Richtung der genannten Querachse verschobenes Verbindungsrohr oder ein Verbindungsabschnitt des Lenkgriffs infolge des in die Ausnehmung ragenden Bolzens zwangsweise gedreht wird. Dadurch bewirkt also die axiale Verschiebung gleichzeitig eine Drehung um die genannte Querachse. Oder in anderen Worten, es besteht eine gekoppelte translatorisch-rotatorische Bewegung entlang der Kurvenbahn, bei der die Lenkgriffe entlang der Querachse nach innen oder aussen gefahren werden und sich gleichzeitig entlang der Drehachse zum Fahrer hin drehen oder wegdrehen. Außerdem verbindet der genannte Bolzen gleichzeitig den Elektromotor mit seinem Spindeltrieb mit den Lenkgriffen, beispielsweise über das Führungsrohr und/oder über das Verbindungsrohr.

Es ist denkbar und möglich eine geradlinige, spiralförmige oder schraubenförmige Ausnehmung auszubilden. Weiterhin können auch mehrere gleichsinnig verlaufende Ausnehmungen vorgesehen sein, in die mehrere Bolzen eingreifen.

In einer kinetisch gleich wirkenden alternativen Ausführungsform ist vorgesehen, dass zwei Endabschnitte des Führungsrohres mit mindestens jeweils einer zumindest in einem Abschnitt schraubenförmigen Ausnehmung versehen sind, in die jeweils ein am jeweiligen Verbindungsrohr befestigter radial nach innen ragender Bolzen eingreift. Bei dieser Ausführungsform ist die Anordnung der schraubenförmigen Ausnehmung und des Bolzens am jeweiligen Verbindungsrohr bzw. am Führungsrohr lediglich vertauscht. Auch bei der zuletzt genannten Bauform können alternativ auf jeder Seite mehr als eine gleichförmig verlaufende Ausnehmung und jeweils mehr als ein Bolzen vorgesehen sein. Es ist weiterhin denkbar und möglich, ein Bolzenkopf an beiden Seiten des Bolzenschafts vorgesehen ist. Der Bolzen kann aus unststoff gefertigt sein.

Beide zuletzt genannten Bauformen ermöglichen die Verspannung des jeweiligen Verbindungsrohrs und damit des jeweiligen Lenkgriffs am Nabenteil sowohl in der ausgefahrenen Gebrauchsstellung als auch in der eingefahrenen Bereitschaftsstellung. Der jeweilige Spindeltrieb sorgt dafür, dass sich die Verspannung nicht selbstständig lösen kann. Die Verspannung bewirkt eine spielfreie Verbindung zwischen den Lenkgriffen und dem Nabenteil sowohl in der Gebrauchsstellung als auch in der Bereitschaftsstellung, so dass in beiden Positionen eine sichere und spielfreie Betätigung der Lenkung möglich ist.

Die Erfindung wird noch verbessert durch die Maßnahme, dass jede Ausnehmung des jeweiligen Verbindungsrohrs oder je nach Bauvariante jede Ausnehmung des Führungsrohrs, an beiden Enden ihres schraubenförmigem Abschnitts jeweils axial ausgerichtete Endabschnitte aufweist. Diese Maßnahme stellt sicher, dass auch bei größerer Krafteinwirkung auf die Lenkgriffe eine Drehung in Richtung der genannten Querachse verhindert wird, wenn der jeweilige Bolzen im jeweiligen axial ausgerichteten Endabschnitt liegt. Dann ist eine Drehung des jeweiligen Lenkgriffs blockiert. Eine separate Blockiervorrichtung zum Sichern der Lenkgriffe in den beiden Endpositionen ist daher mit Vorteil überflüssig, denn das Blockieren wird hier durch geringsten Aufwand gewährleistet. Bevorzugt weist die Ausnehmung eine Gleitschicht oder einen Dämpfer auf, um die Bewegung des Bolzens abzufedern. Dieser kann auch lediglich in den Endbereichen der Ausnehmung vorgesehen sein. Es ist auch denkbar und möglich, dass der Bolzen, am Bolzenkopf und/oder am Bolzenschaft ein Dämpfungselement oder die Dämpfschicht ausgebildet sind, um die Lebensdauer der Verstellvorrichtung zu verlängern.

Die Erfindung ermöglicht somit durch einfach und kostengünstig herstellbare Konstruktionsdetails mittels eines oder zweier Elektromotoren, eines oder zweier Spindeltriebe und zweier Ausnehmungen in Form von Kurvenbahnen mit axial ausgerichteten Endabschnitten mehrere Funktionen, nämlich das axiale Ein- und Ausfahren von zwei Lenkgriffen, dass Drehen von zwei Lenkgriffen aus dem Bereich des Fahrers heraus und das Blockieren der beiden Lenkgriffe in den jeweiligen Endpositionen der Bereitschaftsstellung und der Gebrauchsstellung. Des Weiteren ermöglicht das Verspannen der Verbindungsrohre in den jeweiligen Endstellungen mittels der selbsthemmenden Spindeltriebe eine spielfreie Fixierung der Lenkgriffe am Nabenteil. Ein weiterer Vorteil dieser Maßnahme besteht darin, dass ein Spiel zwischen den Bauteilen, insbesondere zwischen den Verbindungsrohren und dem Führungsrohr während des Verstellvorgangs toleriert werden kann. Dies wiederum hat den Vorteil, dass die entsprechenden Bauteile mit großen Toleranzen und damit wesentlich kostengünstiger hergestellt werden können.

Auch wenn hier im Beispiel eine elektromechanische Servolenkung mit mechanischer Kopplung zwischen Steuerhorn und Lenkritzel dargestellt ist, kann die Erfindung bevorzugt auch für Kraftfahrzeuglenkungen angewendet werden, bei denen keine mechanische Kopplung vorhanden ist. Derartige Lenksysteme sind unter dem Begriff Steer by wire bekannt.

Ausführungsbeispiele der Erfindung werden nachfolgend anhand der Zeichnungen näher erläutert. Die Figuren zeigen im Einzelnen:
- Figur 1:: eine schematische Darstellung einer Lenkvorrichtung für Kraftfahrzeuge;
- Figur 2:: ein erfindungsgemäßes Steuerhorn in einer perspektivischen Darstellung;
- Figur 3:: eine alternative erfindungsgemäßes Steuerhorn in einer perspektivischen Darstellung;
- Figur 4:: das Steuerhorn von Figur 2 in teilweise zerlegtem Zustand;
- Figur 5:: das Steuerhorn von Figur 2 in einer Seitenansicht;
- Figur 6:: eine teilweise Schnittdarstellung eines erfindungsgemäßen Steuerhorns von Figur 2;
- Figur 7:: eine weitere teilweise Schnittdarstellung eines erfindungsgemäßen Steuerhorns mit zwei Gewindespindeln an einem Elektromotor von Figur 6.

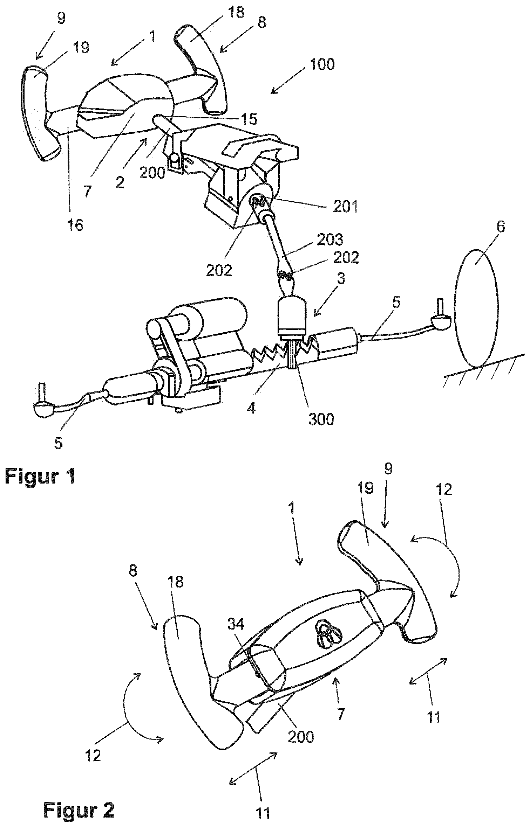

In Figur 1 ist eine Kraftfahrzeuglenkung 100 dargestellt, wobei ein Fahrer über ein Steuerhorn 1 ein Lenkmoment als Lenkbefehl in eine Lenkwelle 1 einprägt. Das Lenkmoment wird über die Lenkwelle 2 auf ein Lenkritzel 40 übertragen, welches mit einer Zahnstange 4 kämmt. Die Zahnstange 4 überträgt eine Verschiebung der Spurstangen 5 auf die lenkbaren Fahrzeugräder 6. Die Lenkwelle 2 weist eingangsseitig eine mit dem Steuerhorn 1 verbundene Eingangswelle 200 und ausgangsseitig eine mit der Zahnstange 4 über das Lenkritzel 40 verbundene Ausgangswelle 201 auf. Die Eingangswelle 200 und die Ausgangswelle 201 sind drehelastisch über einen in der Figur 1 nicht dargestellten Drehstab miteinander verbunden. Ein vom Fahrer über das Steuerhorn in die Eingangswelle 200 eingeleitetes Drehmoment führt zu einer Relativdrehung der Eingangswelle 200 bezüglich der Ausgangswelle 201. Diese Relativdrehung zwischen Eingangswelle 200 und Ausgangswelle 201 kann über einen Drehwinkelsensor ermittelt werden.

Die Lenkwelle 1 gemäß Figur 1 umfasst weiterhin ein oder mehrere kardanische Gelenke 202, mittels welchen der Verlauf der Lenkwelle 2 im Kraftfahrzeug an die räumlichen Gegebenheiten angepasst werden kann. Eine Lenkzwischenwelle 203 der Lenkwelle 2, der in dem dargestellten Beispiel zwischen zwei kardanischen Gelenken 202 angeordnet ist und die Ausgangswelle 201 mit dem Lenkritzel 300 des Lenkgetriebes 3 verbindet, ist erfindungsgemäss als längenveränderbare Lenkwelle 203 ausgebildet.

Das erfindungsgemäße Steuerhorn 1, wie in Figur 2 dargestellt, besitzt ein Nabenteil 7 und zwei seitlich am Nabenteil 7 angebrachte Lenkgriffe 8, 9, die längs einer die beiden Lenkgriffe 8, 9 verbindenden Querachse 10 in Pfeilrichtung 11 verschiebbar sind. In einer Gebrauchsstellung sind die beiden Lenkgriffe 8, 9 jeweils in einem ausgefahrenen Zustand und für den Fahrer bequemen Abstand, wie beispielsweise im größtmöglichen Abstand zum Nabenteil 7, angeordnet. In dieser Gebrauchsstellung befinden sich die Lenkgriffe 8, 9, wenn der Fahrer das Kraftfahrzeug manuell mittels des Steuerhorns 1 lenkt und hierfür die Lenkgriffe 8, 9 ergreift. Wenn das Kraftfahrzeug mithilfe eines Bordcomputers vollautomatisch ohne eines Lenkinputs durch den Fahrer fährt und lenkt, ist es nicht erforderlich, dass der Fahrer manuell eingreifen kann. In diesem Fall sind die Lenkgriffe 8, 9 in der Gebrauchsstellung hinderlich. Es ist daher eine Bereitschaftsstellung der Lenkgriffe 8, 9 vorgesehen, in der diese in Pfeilrichtung 11 aufeinander zu bis dicht an das Nabenteil 7 verschoben und eingefahren werden. Gleichzeitig werden die Lenkgriffe 8, 9 in Drehrichtung 12 vom Fahrer weg zur Front des Kraftfahrzeugs hin verdreht. In dieser Bereitschaftsstellung fährt das Kraftfahrzeug grundsätzlich ohne Eingriff des Fahrers. Dieser kann aber im Notfall die in Bereitschaftsstellung befindlichen Lenkgriffe 8, 9 dennoch ergreifen und manuelle Lenkeingaben vornehmen.

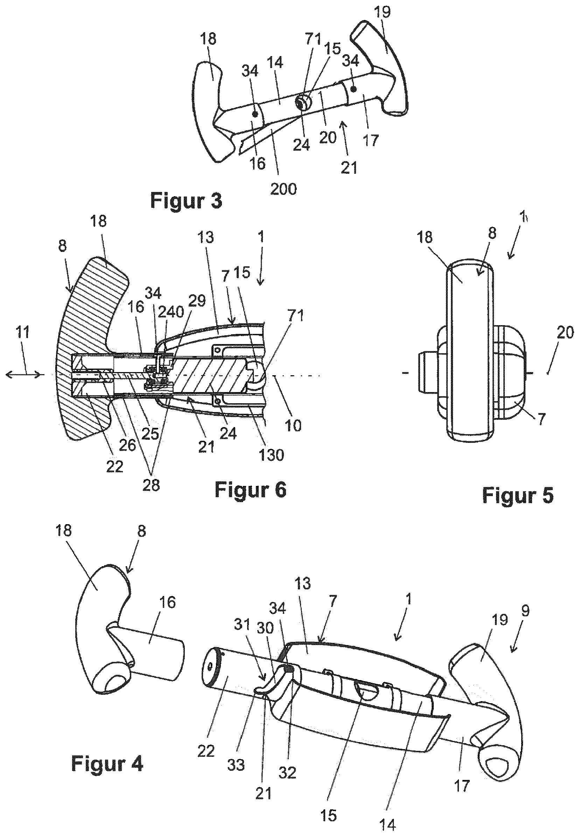

In Figur 3 ist ein Steuerhorn 1 mit einer Nabe 71 dargestellt. Die Nabe 71 umfasst eine Befestigungsöffnung 15, über welche das Steuerhorn 1 mit der Eingangswelle 200 verbunden ist. Über einen oder mehrere Verstellmotoren 24 lassen sich die Verbindungsabschnitte 16,17 der Lenkgriffe 18, 19 über die motorisch angetriebene Verstellvorrichtung 21 von der Bereitschaftsstellung in die Gebrauchsstellung bringen und umgekehrt.

Wie in den Figuren 4 oder 6 zu erkennen ist, umfasst die Nabe 71 das Nabenteil 7 bestehend aus einer Abdeckung 13 innerhalb derer ein Führungsrohr 14 angeordnet und längs zur Querachse 10 ausgerichtet ist. Das Führungsrohr 14 besitzt eine Befestigungsöffnung 15 zur Befestigung des Steuerhorns 1 auf der Lenkwelle 2. Die Lenkgriffe 8, 9 haben jeweils einen Verbindungsabschnitt 16, 17, welcher zur Verbindung des Lenkgriffs 8, 9 mit dem Nabenteil 7 dient, und jeweils einem Griffteil 18, 19, welches sich in Gebrauchsstellung des Steuerhorns 1 innerhalb einer zur Drehachse 20 der Lenkwelle 2 (Figur 5) orthogonalen Ebene nach oben erstreckt und sich in Bereitschaftsstellung des Steuerhorns 1 zur Fahrzeugfront hin erstreckt. Die genannte zur Drehachse 20 der Lenkwelle 2 orthogonale Ebene ist in Figur 6 die Papierebene. Dabei werden die Lenkgriffe 8, 9 in der Drehrichtung 12 um einen Winkel, der zwischen 45° und etwa 90° verdreht und in Axialrichtung oder Pfeilrichtung 11 um eine Strecke von etwa 30 bis 40 mm verschoben.

Zur Verstellung der Lenkgriffe 8, 9 zwischen der Gebrauchsstellung und der Bereitschaftsstellung dient eine Verstellvorrichtung 21. Zur Verstellvorrichtung 21 gehört das mit der Lenkwelle 2 drehfest verbundene Führungsrohr 14, welches längs der Querachse 10 ausgerichtet ist, und ein Verbindungsrohr 22, welches gegenüber dem Führungsrohr 14 in Pfeilrichtung 11 verschiebbar und in Drehrichtung 12 drehbar angeordnet ist. Die in Figur 6 teilweise dargestellte Schnittdarstellung zeigt die Verstellvorrichtung 21 eines Lenkgriffs 8. Die Verstellvorrichtung 21 des zweiten Lenkgriffs 9 ist achsenssymmetrisch zum ersten Lenkgriff 8 angeordnet und jeweils mit den gleichen Bauteilen vorgesehen. Hierfür ist das Verbindungsrohr 22 auf das Führungsrohr 14 aufgesteckt. In den Figuren 4 und 6 ist das erste oder linke Verbindungsrohr 22 in dem linken Verbindungsabschnitt 16 des linken Lenkgriffs 8 aufgenommen. Der auf der linken Seite von Figur 4, 6 oder 7 dargestellte Lenkgriff 8 besitzt einen separaten Verbindungsabschnitt 16, der auf das Verbindungsrohr 22 aufgeschoben und fest mit diesem verbunden wird. Der Verbindungsabschnitt 16 und das Verbindungsrohr 22 um die Querachse 10 drehbar gelagert. Die Gleitlager 28 sind beabstandet zueinander angeordnet.

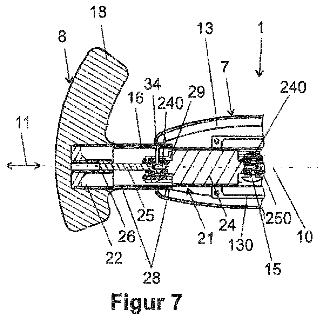

In Figur 6 und 7 erkennt man einen Elektromotor 24, der zur Betätigung der Verstellvorrichtung 21 dient. Eine in Richtung der Querachse 10 ausgerichtete Motorwelle 240 des Elektromotors 24 ist mit einer Spindel 25 versehen, die mit einer am Verbindungsrohr 22 drehfest angebrachten Mutter 26 zusammenwirkt. Ein doppeltes Kugellager lagert die Spindel 25 und die Motorwelle 240. Ein Gehäuseelement 29 verbindet die Motorwelle 240 und die Gewindespindel 25 über das Kugellager miteinander. Wenn sich der Motor in einer Drehrichtung dreht, so dass sich die Spindel 25 in die Mutter 26 hineindreht, wird die Mutter zusammen mit dem Verbindungsrohr 22, dem Verbindungsabschnitt 26 und dem damit verbundenen Griffteil 18 sowohl in Pfeilrichtung 11 als auch in Drehrichtung 12 zum Nabenteil 7 hin verschoben, sodass die Verstellvorrichtung 21 in Bereitschaftsstellung gebracht wird. Es findet also eine gekoppelte translatorisch-rotatorische Bewegung des Verbindungsabschnitts statt, bei der der Lenkgriff 18 zum Fahrer hingedreht wird und der Verbindungsabschnitt in Richtung eines Gehäuseabschnitts 130 oder einer Abdeckung 13 des Nabenteils 7 eingefahren wird. Bei entgegengesetzter Drehrichtung des Elektromotors 24, von Bereitschaftsstellung in Gebrauchsstellung schraubt sich die Spindel 25 aus der Mutter 26 heraus, so dass die Mutter 26 mit dem Verbindungsrohr 22, dem darauf angeordneten Verbindungsabschnitt 16 und dem Griffteil 18 in Pfeilrichtung 11 nach außen von dem Gehäuseabschnitt 130 oder dem Nabenteil 7 weg geschoben wird und in Drehrichtung vom Fahrer weggedreht wird. In analoger Weise funktioniert die Verschiebung auch beim zweiten Lenkgriff 9.

Zum Antreiben der jeweiligen Spindel 25 in der Mutter 26 kann entweder je ein Elektromotor 24 vorgesehen sein, wobei die nicht gezeigte Spindel des nicht gezeigten zweiten Elektromotors in Pfeilrichtung 11 achsensymmetrisch in die entgegengesetzte Richtung ragen muss, während die dargestellte Spindel 25 des dargestellten Elektromotors 24 in Pfeilrichtung 11 nach links ragt. Dabei sind die beiden Elektromotoren 24 mit Vorteil besonders platzsparend innerhalb des Führungsrohrs 14 oder parallel zu diesem über einen Riementrieb angeordnet.

Wie in Figur 7 dargestellt kann auch ein einziger Elektromotor 24 mit zwei Spindeltrieben 25, 26, 250 für die Verschiebung der beiden Verbindungsrohre 22 oder der Verbindungsabschnitte 16, 17 und damit der beiden Lenkgriffe 8, 9 vorgesehen sein. Bei dieser Ausführungsform kann der einzige Elektromotor 24 im Führungsrohr 14 angeordnet sein, seine Motorwelle 240 muss aber auf beiden Axialseiten aus dem Motorgehäuse herausgeführt und mit jeweils einer Spindel 25, 250 versehen sein, wobei die beiden Spindeln in entgegengesetzte Richtungen weisen und längs der genannten Querachse 10 ausgerichtet sind. Die beiden Spindeln ragen jeweils in einer Mutter, die wiederum jeweils direkt oder indirekt mit dem zugehörigen Verbindungsrohr 22 verbunden sind. Dabei ist jedoch zu beachten, dass eine erste Spindel 25 und ihre zugehörige erste Mutter 26 ein Rechtsgewinde und eine zweite Spindel 250 und ihre zugehörige zweite Mutter ein Linksgewinde aufweisen. Nur bei dieser Anordnung ist gewährleistet, dass eine Drehung der Motorwelle des Elektromotors 24 in einer Drehrichtung beide Muttern gleichzeitig nach außen oder bei einer Drehung in die entgegengesetzte Drehrichtung beide gleichzeitig nach innen verschoben werden.

Zur technischen Realisierung der Drehung der beiden Lenkgriffe 8, 9 in Drehrichtung 12, sind die Verbindungsrohre 22 jeweils durch ein Lager 28 um die genannte Querachse 10 drehbar gelagert. In Figur 6 erkennt man das Gleitlager 28, welches hier als doppeltes Gleitlager ausgestaltet ist.

Wie in Figur 4 dargestellt, hat das Verbindungsrohr 22 eine in einem Abschnitt 30 angrenzend zur Abdeckung 13 des Nabenteils 7 eine schraubenförmige Ausnehmung 31, welche durch zwei Endabschnitte 32, 33 begrenzt wird. Die Kurvenbahn der Ausnehmung 31 beschreibt eine S-förmige Bahn. In die Ausnehmung greift ein Bolzen 34 ein, welcher am Führungsrohr 14 befestigt ist und vom Führungsrohr 14 ausgehend radial nach außen ragt. Der Bolzen 34 verbindet gleichzeitig auch das Verbindungsrohr 14 mit dem jeweiligen Führungsrohr 22. Die zwei axial ausgerichteten Endabschnitte 32, 33 der Ausnehmung 31 gehen vom mittleren Abschnitt 30 aus oder in den mittleren Abschnitt 30 über. Wird das Verbindungsrohr 22 mittels des Spindeltrieb 25, 26 in die in Figur 4 gezeigte Gebrauchsstellung gebracht, so stoppt der Bolzen 34 im inneren Endabschnitt 32 . Da der innere Endabschnitt 32 axial ausgerichtet ist, d.h. in Richtung der Querachse 10 verläuft, wenn auch nur ein sehr kurzes Stück, ist das Verbindungsrohr 22 gegen Verdrehungen um die Drehrichtung 12 verriegelt. Dabei liegt der Bolzen 34 mit Vorspannung am in Figur 4 oberen rechten Ende des Endabschnitts 32 an und verspannt damit das Verbindungsrohr 22 mit dem Führungsrohr 14.

Sollte die Ausnehmung 31 oder der Bolzen 34 aufgrund einer kostengünstigen und weniger maßhaltigen Fertigung Spiel aufweisen, so tritt dies nur während des Verstell- und Verdrehvorgangs aus der Gebrauchsstellung in die Bereitschaftsstellung oder umgekehrt auf. Wegen der oben genannten Verspannung kann sich das Spiel in der jeweiligen Endstellung (Gebrauchsstellung oder Bereitschaftsstellung) nicht mehr auswirken.

In analoger Weise liegt der Bolzen 34 bei in Pfeilrichtung 11 maximal nach innen verschobenem Lenkgriff 8 am Ende des unteren nach links weisenden Endabschnitts 33 an und verspannt das Verbindungsrohr 22 wiederum mit dem Führungsrohr 14. Dies hat dieselben positiven Auswirkungen wie oben beschrieben.

Der geradlinige mittlere Abschnitt 30 der Ausnehmung 31 ermöglicht, dass das Verbindungsrohr 22 bei einer Verschiebung in Pfeilrichtung 11 mittels des Spindeltriebs 25, 26 gleichzeitig auch in Drehrichtung 12 um einen definierten Winkel gedreht wird, so dass das Griffteil 18 des Lenkgriffs 8 in Drehrichtung 12 vom Fahrer weg und zur Fahrzeugfront hin gedreht wird. Diese Drehbewegung wird also allein durch die Formgebung der Ausnehmung 31 erzielt und erfordert keinerlei weitere Verdrehvorrichtung, insbesondere keinen weiteren Elektromotor.

Die Verschiebung in Pfeilrichtung 11 und die Verdrehung in Drehrichtung 12 beim anderen Lenkgriff 9 erfolgt in analoger Weise. Auch hier ist in dem mit dem Verbindungsabschnitt 17 identischen Verbindungsrohr 23 eine nicht gezeigte Ausnehmung vorgesehen, die einen mittleren schraubenförmigem Abschnitt 30 und zwei in Richtung der Querachse 10 verlaufende axiale Endabschnitte 32, 33 aufweist. Ein nicht gezeigter Bolzen ist ebenfalls am Führungsrohr 14 befestigt und ragt vom Führungsrohr 14 radial nach außen in die nicht gezeigte Ausnehmung des Verbindungsrohrs 22 bzw. des Verbindungsabschnitts 17 hinein.

In einer nicht gezeigten Ausführungsform, bei der das Führungsrohr 14 in seinen Endbereichen jeweils mit einer einen schraubenförmigem Abschnitt aufweisenden Ausnehmung versehen ist, in die ein am jeweiligen Verbindungsrohr 22 befestigter Bolzen radial nach innen eingreift.

Die Erfindung gewährleistet somit durch einfache konstruktive Maßnahmen eine sichere Verstellung der Lenkgriffe 8, 9 des erfindungsgemäßen Steuerhorns 1 aus einer Gebrauchsstellung in eine Bereitschaftsstellung oder umgekehrt, wobei neben einer axialen Verschiebung in Pfeilrichtung 11 gleichzeitig auch eine Drehung der Lenkgriffe 8, 9 in Drehrichtung 12 verwirklicht wird und ohne das Erfordernis besonderer Blockiervorrichtungen eine spielfreie Arretierung der Lenkgriffe 8, 9 in der jeweiligen Endstellung der Gebrauchsstellung sowie der Bereitschaftsstellung gewährleistet ist. Der bauliche Aufwand und die damit verbundenen Fertigungskosten sind vorteilhaft gering.

## Patentansprüche

1. Steuerhorn für eine Lenkung eines Kraftfahrzeugs, mit einer auf einer Lenkwelle (2) befestigten Nabe (71), die mit zwei seitlich in entgegengesetzte Richtungen abstehenden Lenkgriffen (8, 9) verbunden ist und eine motorisch angetriebene Verstellvorrichtung (21) aufweist, mittels derer die Lenkgriffe (8, 9) aus einer Gebrauchsstellung mit größerem Abstand zur Nabe (71) in eine Bereitschaftsstellung mit kleinerem Abstand zur Nabe (71) verschiebbar sind und umgekehrt, **dadurch gekennzeichnet, dass** die Lenkgriffe (8, 9) mittels der Verstellvorrichtung (21) um die die beiden Lenkgriffe (8, 9) verbindende, quer zu einer Drehachse (20) der Lenkwelle (2) angeordneten Querachse (10) in der Gebrauchsstellung zum Fahrer hin und in der Bereitschaftsstellung vom Fahrer weg drehbar sind, wobei die Lenkgriffe (8, 9) mittels der Verstellvorrichtung (21) entlang der Querachse (10) verschiebbar sind.

2. Steuerhorn (1) nach Anspruch 1, **dadurch gekennzeichnet, dass** die Lenkgriffe (8, 9) jeweils einen in Richtung der genannten Querachse (10) verlaufenden, mit der Nabe (71) verbundenen Verbindungsabschnitt (16, 17) aufweisen, der mit einem radial nach außen angeordneten Griffteil (18, 19) verbunden ist, welches sich in Gebrauchsstellung des Steuerhorns (1) innerhalb einer zur Drehachse (20) der Lenkwelle (2) orthogonalen Ebene nach oben erstreckt und welches sich in Bereitschaftsstellung des Steuerhorns (1) zur Fahrzeugfront hin erstreckt.

3. Steuerhorn (1) nach einem der vorhergehenden Ansprüche, **dadurch gekennzeichnet, dass** die Verstellvorrichtung (21) ein mit der Lenkwelle (2) drehfest verbundenes Führungsrohr (14) aufweist, das längs der genannten Querachse (10) ausgerichtet ist.

4. Steuerhorn (1) nach einem der vorhergehenden Ansprüche, **dadurch gekennzeichnet, dass** jeder Verbindungsabschnitt (16, 17) der Lenkgriffe (8, 9) ein Verbindungsrohr (22) aufweist, das gegenüber dem Führungsrohr (14) verschiebbar geführt ist.

5. Steuerhorn (1) nach Anspruch 4, **dadurch gekennzeichnet, dass** das jeweilige Verbindungsrohr (22) und der jeweilige Verbindungsabschnitt (16, 17) einstückig ausgebildet sind.

6. Steuerhorn (1) nach Anspruch 4 oder 5, **dadurch gekennzeichnet, dass** das jeweilige Verbindungsrohr (22) durch einen von einem Elektromotor (24) angetriebenen Spindeltrieb (25, 26, 250) gegenüber dem Führungsrohr (14) verschiebbar ist.

7. Steuerhorn (1) nach Anspruch 6, **dadurch gekennzeichnet, dass** der Elektromotor (24) mit zwei Spindeltrieben (25, 26, 250) für die Verschiebung der beiden Verbindungsrohre (22) vorgesehen ist.

8. Steuerhorn (1) nach Anspruch 6, **dadurch gekennzeichnet, dass** zwei Elektromotoren (24) mit zwei Spindeltrieben (25, 26, 250) für die Verschiebung des jeweiligen Verbindungsrohrs (22,) vorgesehen sind.

9. Steuerhorn (1) nach Anspruch 8, **dadurch gekennzeichnet, dass** die zwei Elektromotoren (24) der Spindeltriebe (25, 26, 250) im Führungsrohr (14) angeordnet sind, dass auf den Motorwellen (240) angeordnete Spindeln (25) jeweils in Richtung des zugehörigen Verbindungsrohrs (22) ausgerichtet sind und dass auf den Spindeln (25) sitzende Muttern (26, 27) jeweils mit dem zugehörigen Verbindungsrohr (22) direkt oder indirekt verbunden sind.

10. Steuerhorn (1) nach Anspruch 8, **dadurch gekennzeichnet, dass** die zwei Elektromotoren (24) der Spindeltriebe (25, 26, 250) jeweils in dem Verbindungsrohr (22) angeordnet sind, dass die auf den Motorwellen (240) angeordneten Spindeln (25, 250) jeweils in Richtung (11) des Führungsrohrs (14) ausgerichtet sind und dass die auf den Spindeln (25, 250) sitzenden Muttern (26, 27) mit dem Führungsrohr (14) verbunden sind.

11. Steuerhorn (1) nach Anspruch 7, **dadurch gekennzeichnet, dass** ein Elektromotor (24) im Führungsrohr (14) angeordnet ist, dass auf beiden Axialseiten der Motorwelle jeweils eine Spindel (25, 250) angeordnet ist, die in Richtung (11) des zugehörigen Verbindungsrohrs (22) ausgerichtet ist, dass die auf den Spindeln sitzenden Muttern (26, 27) jeweils mit dem zugehörigen Verbindungsrohr (22) direkt oder indirekt verbunden sind, wobei eine erste Spindel (25) und ihre zugehörige erste Mutter (26) ein Rechtsgewinde und eine zweite Spindel und ihre zugehörige zweite Mutter ein Linksgewinde aufweisen.

12. Steuerhorn (1) nach einem der vorhergehenden Ansprüche, **dadurch gekennzeichnet, dass** das jeweilige Verbindungsrohr (22) jeweils durch ein Lager (28) um die genannte Querachse (10) drehbar gelagert sind.

13. Steuerhorn (1) nach Anspruch 12, **dadurch gekennzeichnet, dass** das jeweilige Lager (28) an einem Gehäuseelement (29) des zugehörigen Elektromotors (24) befestigt ist.

14. Steuerhorn (1) nach einem der Ansprüche 12 oder 13, **dadurch gekennzeichnet, dass** das jeweilige Verbindungsrohr (22) und/oder das Führungsrohr (14) jeweils eine zumindest in einem Abschnitt (30) vorgesehene Ausnehmung (31) aufweiset, in die jeweils ein am Führungsrohr (14) befestigter, radial nach außen ragender Bolzen (34) eingreift.

15. Steuerhorn nach einem der Ansprüche 12 oder 13, **dadurch gekennzeichnet, dass** zwei Endabschnitte eines Führungsrohrs mit mindestens jeweils einer zumindest in einem Abschnitt Ausnehmung versehen sind, in die jeweils ein am jeweiligen Verbindungsrohr befestigter radial nach innen ragender Bolzen eingreift.

16. Steuerhorn (1) nach Anspruch 14 oder 15, **dadurch gekennzeichnet, dass** jede Ausnehmung (31) des Verbindungsrohrs (22) oder des Führungsrohrs (14) an beiden Enden ihres Abschnitts (30) jeweils axial ausgerichtete Endabschnitte (32, 33) aufweist.

## Claims

1. A control yoke (1) for steering a motor vehicle, with a hub (71) which is attached to a steering shaft (2), is connected to two steering handles (8, 9) protruding laterally in opposite directions, and has a motor-driven adjustment device (21) by means of which the steering handles (8, 9) are displaceable from a usage position at a greater distance from the hub (71) into a standby position at a smaller distance from the hub (71) and vice versa, **characterized in that** the steering handles (8, 9) are rotatable by means of the adjustment device (21) towards the driver in the usage position and away from the driver in the standby position about a transverse axis (10) which connects the two steering handles (8, 9) and is arranged transversely to the rotation axis (20) of the steering shaft (2), wherein the steering handles (8, 9) are displaceable along the transverse axis (10) by means of the adjustment device (21).

2. The control yoke (1) as claimed in claim 1, **characterized in that** the steering handles (8, 9) each have a connecting portion (16, 17) which runs in the direction of said transverse axis (10) and is connected to the hub (71), and is connected to a radially outwardly arranged handle part (18, 19) which, in the usage position of the control yoke (1), extends upward inside a plane orthogonal to the rotation axis (20) of the steering shaft (2) and, in the standby position of the control yoke (1), extends towards the vehicle front.

3. The control yoke (1) as claimed in one of the preceding claims, **characterized in that** the adjustment device (21) has a guide tube (14) which is connected rotationally fixedly to the steering shaft (2) and is oriented along said transverse axis (10).

4. The control yoke (1) as claimed in any of the preceding claims, **characterized in that** each connecting portion (16, 17) of the steering handles (8, 9) comprises a connecting tube (22) which is guided so as to be displaceable relative to the guide tube (14).

5. The control yoke (1) as claimed in claim 4, **characterized in that** the respective connecting tube (22) and the respective connecting portion (16, 17) are formed of one piece.

6. The control yoke (1) as claimed in claim 4 or 5, **characterized in that** the respective connecting tube (22) is displaceable relative to the guide tube (14) by means of a spindle drive (25, 26, 250) driven by an electric motor (24).

7. The control yoke (1) as claimed in claim 6, **characterized in that** the electric motor (24) is provided with two spindle drives (25, 26, 250) for displacing both connecting tubes (22).

8. The control yoke (1) as claimed in claim 6, **characterized in that** two electric motors (24) are provided with two spindle drives (25, 26, 250) for displacing the respective connecting tube (22).

9. The control yoke (1) as claimed in claim 8, **characterized in that** the two electric motors (24) of the spindle drives (25, 26, 250) are arranged in the guide tube (14), that spindles (25) arranged on the motor shafts (240) are each oriented in the direction of the respective connecting tube (22), and that nuts (26, 27) sitting on the spindles (25) are each connected directly or indirectly to the associated connecting tube (22).

10. The control yoke (1) as claimed in claim 8, **characterized in that** the two electric motors (24) of the spindle drives (25, 26, 250) are each arranged in the connecting tube (22), that the spindles (25, 250) arranged on the motor shafts (240) are each oriented in the direction (11) of the guide tube (14), and that the nuts (26, 27) sitting on the spindles (25, 250) are connected to the guide tube (14).

11. The control yoke (1) as claimed in claim 7, **characterized in that** an electric motor (24) is arranged in the guide tube (14), that a spindle (25, 260) is arranged on each axial side of the motor shaft and is oriented in the direction (11) of the associated guide tube (22), that the nuts (26, 27) sitting on the spindles are each directly or indirectly connected to the associated connecting tube (22), wherein a first spindle (25) and its associated first nut (26) have a right-hand thread, and a second spindle and its associated second nut have a left-hand thread.

12. The control yoke (1) as claimed in any of the preceding claims, **characterized in that** the respective connecting tube (22) is mounted via a respective bearing (28) so as to be rotatable about said transverse axis (10).

13. The control yoke (1) as claimed in claim 12, **characterized in that** the respective bearing (28) is attached to a housing element (29) of the associated electric motor (24).

14. The control yoke (1) as claimed in one of claims 12 or 13, **characterized in that** the respective connecting tube (22) and/or the guide tube (14) each has a recess (31) in at least one portion (30), into each of which a radially outwardly protruding bolt (34) engages which is attached to the guide tube (14).

15. The control yoke (1) as claimed in one of claims 12 or 13, **characterized in that** two end portions of the guide tube are each provided with at least one recess in at least one portion, into each of which a radially inwardly protruding bolt engages which is attached to the respective connecting tube.

16. The control yoke (1) as claimed in claim 14 or 15, **characterized in that** each recess (31) of the connecting tube (22) or guide tube (14) has an axially oriented end portion (32, 33) at both ends of its portion (30).

## Revendications

1. Manche pour une direction de véhicule automobile, comportant un moyeu (71) fixé sur un arbre de direction (2), lequel moyeu est relié à deux poignées de direction (8, 9) faisant saillie latéralement dans des sens opposés et comprend un dispositif de réglage (21) entraîné par moteur, dispositif de réglage au moyen duquel les poignées de direction (8, 9) peuvent être déplacées d'une position d'utilisation présentant une plus grande distance par rapport au moyeu (71) à une position d'attente présentant une plus petite distance par rapport au moyeu (71) et inversement,
**caractérisé en ce que** les poignées de direction (8, 9) peuvent, au moyen du dispositif de réglage (21), tourner autour de l'axe transversal (10) reliant les deux poignées de direction (8, 9) et disposé transversalement à un axe de rotation (20) de l'arbre de direction (2) vers le conducteur dans la position d'utilisation et à l'écart du conducteur dans la position d'attente, les poignées de direction (8, 9) étant déplaçables le long de l'axe transversal (10) au moyen du dispositif de réglage (21).

2. Manche (1) selon la revendication 1, **caractérisé en ce que** les poignées de direction (8, 9) comprennent respectivement une partie de liaison (16, 17) s'étendant dans la direction dudit axe transversal (10) et reliée au moyeu (71), laquelle partie de liaison est reliée à une partie de poignées (18, 19) disposée radialement vers l'extérieur, laquelle s'étend vers le haut à l'intérieur d'un plan perpendiculaire à l'axe de rotation (20) de l'arbre de direction (2) dans la position d'utilisation du manche (1) et laquelle s'étend vers l'avant du véhicule dans la position d'attente du manche (1).

3. Manche (1) selon l'une des revendications précédentes, **caractérisé en ce que** le dispositif de réglage (21) comprend un tube de guidage (14) relié de manière solidaire en rotation à l'arbre de direction (2), lequel tube est orienté le long dudit axe transversal (10) .

4. Manche (1) selon l'une des revendications précédentes, **caractérisé en ce que** chaque partie de liaison (16, 17) des poignées de direction (8, 9) comprend un tube de liaison (22) qui est guidé de manière déplaçable par rapport au tube de guidage (14).

5. Manche (1) selon la revendication 4, **caractérisé en ce que** le tube de liaison respectif (22) et la partie de liaison respective (16, 17) sont réalisés d'une seule pièce.

6. Manche (1) selon la revendication 4 ou 5, **caractérisé en ce que** le tube de liaison respectif (22) est déplaçable par rapport au tube de guidage (14) au moyen d'un entraînement à broche (25, 26, 250) entraîné par un moteur électrique (24).

7. Manche (1) selon la revendication 6, **caractérisé en ce que** le moteur électrique (24) est doté de deux entraînements à broche (25, 26, 250) pour le déplacement des deux tubes de liaison (22).

8. Manche (1) selon la revendication 6, **caractérisé en ce que** deux moteurs électriques (24) dotés de deux entraînements à broche (25, 26, 250) sont prévus pour le déplacement du tube de liaison respectif (22).

9. Manche (1) selon la revendication 8, **caractérisé en ce que** les deux moteurs électriques (24) des entraînements à broche (25, 26, 250) sont disposés dans le tube de guidage (14), **en ce que** des broches (25) disposées sur les arbres de moteur (240) sont orientées respectivement en direction du tube de liaison associé (22), et **en ce que** des écrous (26, 27) reposant sur les broches (25) sont reliés respectivement directement ou indirectement au tube de liaison associé (22).

10. Manche (1) selon la revendication 8, **caractérisé en ce que** les deux moteurs électriques (24) des entraînements à broche (25, 26, 250) sont disposés respectivement dans le tube de liaison (22), **en ce que** les broches (25, 250) disposées sur les arbres de moteur (240) sont orientées respectivement en direction (11) du tube de guidage (14), et **en ce que** les écrous (26, 27) reposant sur les broches (25, 250) sont reliés au tube de guidage (14).

11. Manche (1) selon la revendication 7, **caractérisé en ce qu'**un moteur électrique (24) est disposé dans le tube de guidage (14), **en ce qu'**une broche (25, 250) est disposée respectivement sur les deux côtés axiaux de l'arbre de moteur, laquelle broche est orientée en direction (11) du tube de liaison associé (22), **en ce que** les écrous (26, 27) reposant sur les broches sont reliés respectivement directement ou indirectement au tube de liaison associé (22), une première broche (25) et son premier écrou associé (26) comprenant un filetage à droite et une deuxième broche et son deuxième écrou associé comprenant un filetage à gauche.

12. Manche (1) selon l'une des revendications précédentes, **caractérisé en ce que** le tube de liaison respectif (22) est monté de manière à pouvoir tourner autour dudit axe transversal (10) respectivement au moyen d'un palier (28).

13. Manche (1) selon la revendication 12, **caractérisé en ce que** le palier respectif (28) est fixé à un élément de carter (29) du moteur électrique associé (24).

14. Manche (1) selon l'une des revendications 12 ou 13, **caractérisé en ce que** le tube de liaison respectif (22) et/ou le tube de guidage (14) comprennent respectivement un évidement (31) prévu au moins dans une partie (30), évidement dans lequel vient en prise respectivement un boulon (34) fixé au tube de guidage (14) et faisant saillie radialement vers l'extérieur.

15. Manche selon l'une des revendications 12 ou 13, **caractérisé en ce que** deux parties d'extrémité d'un tube de guidage sont dotées respectivement d'au moins un évidement au moins dans une partie, évidement dans lequel vient en prise respectivement un boulon fixé au tube de liaison respectif et faisant saillie radialement vers l'intérieur.

16. Manche (1) selon la revendication 14 ou 15, **caractérisé en ce que** chaque évidement (31) du tube de liaison (22) ou du tube de guidage (14) comprend, aux deux extrémités de sa partie (30), des parties d'extrémité (32, 33) orientées axialement respectivement.
